Europäisches Patentamt

European Patent Office

Office européen des brevets

(11) Veröffentlichungsnummer: **0 263 992**
**A1**

## (12) EUROPÄISCHE PATENTANMELDUNG

(21) Anmeldenummer: **87113501.8**

(22) Anmeldetag: **15.09.87**

(51) Int. Cl.⁴: **B01D 53/34** , C02F 1/52

(30) Priorität: **17.09.86 DE 3631910**

(43) Veröffentlichungstag der Anmeldung:
**20.04.88 Patentblatt 88/16**

(84) Benannte Vertragsstaaten:
**AT BE CH DE FR GB IT LI NL SE**

(71) Anmelder: **Berliner Kraft- und Licht
(Bewag)-Aktiengesellschaft
Stauffenbergstrasse 26
D-1000 Berlin 30(DE)**

(72) Erfinder: **Clausen, Joachim, Dipl.-Ing.
Gossowstrasse 10
D-1000 Berlin 30(DE)**

(74) Vertreter: **Wey, Hans-Heinrich, Dipl.-Ing. et al
Patentanwälte Müller-Börner & Wey
Widenmayerstrasse 49
D-8000 München 22(DE)**

(54) Verfahren zur Behandlung von bei der Rauchgasentschwefelung anfallendem Abwasser.

(57) Bei der Rauchgasentschwefelung mit $CaCO_3$ anfallendes Abwasser wird wie folgt weiterbehandelt: Zunächst werden aus der entstandenen $CaCl_2$-Lösung etwaige Schwermetallanteile ausgefällt; dann wird der Restlösung $Na_2CO_3$ zugesetzt, und der dabei gebildete $CaCO_3$-Niederschlag wird von der erhaltenen NaCl-Lösung abfiltriert.

EP 0 263 992 A1

## Verfahren zur Behandlung von bei der Rauchgasentschwefelung anfallendem Abwasser

Die in Kraftwerken, insbesondere bei der Rauchgasreinigung, anfallenden Abwässer belasten die Umwelt stark, wenn man sie unbehandelt läßt. Zur Entschwefelung der Abgase von Großfeuerungsanlagen hat sich die Rauchgasentschwefelung bewährt, bei der durch Behandeln mit Calciumcarbonat ($CaCO_3$) eine Calciumchlorid-($CaCl_2$)-Lösung entsteht, welche nach Ausfällung von gegebenenfalls vorhandenen unerwünschten Schwermetallanteilen eingedampft wird. Das als Reststoff anfallende Calciumchlorid wird verpackt und deponiert (J.C. Neumann und G. Hofmann, "Behandlung und Aufarbeitung von Abwässern aus Rauchgaswäschen", BWK 37 (1985) Nr. 9; Wasser, Luft und Betrieb, 1965, Heft 5, Seiten 303-307; Walter Triebel, Handbuch der Abwassertechnik, Verlag Wilh. Ernst & Sohn, 2. Auflage, Band 2, Berlin, München, Düsseldorf, 1975, Seiten 209-212).

Einer der Nachteile dieses oder ähnlicher Verfahren ist darin zu sehen, daß ein Abfallstoff entsteht, der außerordentlich hohe Deponiekosten verursacht, die beispielsweise bei Großkraftwerken mit Jahresaufkommen von etwa 15 000 t Salzrückstand etwa DM 6 000 000,-- betragen können.

Der vorliegenden Erfindung liegt die Aufgabe zugrunde, diese laufenden Kosten weitgehend zu vermeiden und den anfallenden und zu deponierenden Abfallstoff kostengünstig zu einem Produkt zu verarbeiten, welches bei der Rauchgasentschwefelung wieder eingesetzt werden kann.

Diese Aufgabe wird überraschend durch das Verfahren gemäß Patentanspruch 1 gelöst. Eine vorteilhafte Ausgestaltungsform ist Gegenstand des Patentanspruches 2. Auf diese Weise erhält man im Hinblick auf den Chemikalien-und Energieverbrauch beim Eindampfen und Vorbehandeln ein optimales Ergebnis, indem die Salzrückstände bzw. deren aufkonzentrierte Lösung zunächst von unerwünschten Bestandteilen ($CaSO_4$, $Mg^{2+}$, Schwermetalle) gereinigt werden und die erhaltene $CaCl_2$-Lösung zu dem Ausgangsstoff Calciumcarbonat weiterbehandelt wird, indem aus der sedimentierten $CaCl_2$-Lösung mittels Natriumcarbonat ($Na_2CO_3$) neben Natriumchlorid (NaCl) das Calciumcarbonat entsteht, das als schwer löslicher Niederschlag abfiltriert werden kann.

Die Calciumcarbonatfällung erfolgt zweckmäßig in einem heizbaren Fällungsbehälter bei einer Temperatur von etwa 40° C, um die Umwandlung der flockigen Form in die filtrierbare, zentrifugierbare oder auf andere Weise abtrennbare kristalline $CaCO_3$-Form zu begünstigen.

Die Schwermetallfällung erfolgt in an sich bekannter Weise entsprechend der Formel

$$2\ FeCl_3 + 3\ Ca(OH)_2 + 18\ H_2O \rightarrow 2\ Fe(OH)_3 + 3\ [Ca(H_2O)_6]Cl_2$$

Analoge Reaktionen laufen auch bei anderen Kationen höherer Oxidationszahl ($Al^{3+}$, $Cr^{3+}$) ab. Durch hohen $OH^-$-Überschuß bilden sich lösliche Hydroxo-Komplexe, z.B. bei $Al^{3+}$, $Cr^{3+}$. $Pb^{2+}$, $Sn^{4+}$, $Cu^{2+}$.

Ausgehend von einer Calciumchloridlösung läuft die Fällungsreaktion mit Natriumcarbonat nach folgender Formel nahezu stöchiometrisch ab:

$$CaCl_2 + Na_2CO_3 \rightarrow CaCO_3 + 2\ NaCl$$

In Verbindung mit den relativen Molmassen lassen sich die benötigten und erhaltenen Mengen an Edukten und Produkten berechnen.

Nachstehend wird zur Erläuterung ein Beispiel durchgerechnet; drei weitere Beispiele mit $CaCl_2$-Lösungen unterschiedlicher Konzentrationen schließen sich in der Tabelle an.

Chloridgehalt der Lösung: 30 000 mg $Cl^-$/l

$$35,45 \text{ g } Cl^- \mathrel{\hat{=}} 1 \text{ mol}$$
$$30,00 \text{ g } Cl^- \mathrel{\hat{=}} x$$

$$x = \frac{30,00}{35,45} = 0,84626 \text{ mol } Cl^-/1$$

$$846,26 \text{ mmol} \cdot 58,443\ \frac{\text{mg NaCl}}{\text{mmol}} = 49458 \text{ mg NaCl}$$

Aus 1 Liter einer $CaCl_2$-Lösung mit obigem Chloridgehalt werden somit 49,458 g NaCl erhalten.

Diese Chloridmenge ist der halben Molzahl an $Ca^{2+}$-Ionen äquivalent, was 423,13 mmol $Ca^{2+}$/l entspricht.

2

$$423,13 \text{ mmol Ca}^{2+} \cdot 110,99 \frac{\text{mg CaCl}_2}{\text{mmol}} = 46963 \text{ mg CaCl}_2$$

$$423,13 \text{ mmol Ca}^{2+} \cdot 100,09 \frac{\text{mg CaCO}_3}{\text{mmol}} = 42351 \text{ mg CaCO}_3$$

Entsprechend der Formel wird die gleiche Molmenge an $Na_2CO_3$ benötigt:

$$423,13 \text{ mmol} \cdot 105,99 \frac{\text{mg Na}_2\text{CO}_3}{\text{mmol}} = 44848 \text{ mg Na}_2\text{CO}_3$$

Aus 1 Liter einer 46,963 g $CaCl_2$ enthaltenden Lösung wird durch Zugabe von 44,848 g $Na_2CO_3$ eine Menge von 42,351 g $CaCO_3$ ausgefällt und somit für die Rauchgasentschwefelungsanlage zurückgewonnen. Rechnet man bei einer einmaligen Fällung mit 90 %iger Ausbeute, so erhält man 38,116 g $CaCO_3$.

| Bsp. Nr. | Stoff | $Na_2CO_3$ | $CaCO_3$ | $CaCl_2$ | NaCl | $Cl^-$ |
|---|---|---|---|---|---|---|
| | Molmasse $\frac{}{g \cdot mol^{-1}}$ | 105,99 | 100,09 | 110,99 | 58,443 | 35,45 |
| 1 | $\frac{c}{kg \cdot m^{-3}}$ | 44,848 | 42,351 | 46,963 | 49,458 | 30,000 |
| 2 | $\frac{c}{kg \cdot m^{-3}}$ | 14,949 | 14,117 | 15,654 | 16,485 | 10,000 |
| 3 | $\frac{c}{kg \cdot m^{-3}}$ | 28,649 | 27,054 | 30,000 | 31,594 | 19,164 |
| 4 | $\frac{c}{kg \cdot m^{-3}}$ | 9,550 | 9,018 | 10,000 | 10,531 | 3,194 |

Mit dem Verfahren nach der Erfindung sind erhebliche Einsparungen erzielbar; von allen Dingen wird ein wiederverwendbares Produkt in Form von Calciumcarbonat erhalten, welches ohnehin bei der Rauchgasentschwefelung benötigt wird.

Die zum Eindampfen benötigte Energiemenge verringert sich erheblich, da keine vollständige Trocknung, sondern nun eine Aufkonzentrierung der $CaCl_2$-Lösung erfolgt.

Es müssen nur noch die zur $CaSO_4$-Bildung benötigten Mengen an $CaCO_3$ und $Na_2CO_3$ von einer Sodafabrik zugekauft werden, wohingegen die gebildete NaCl-Lösung an die Sodafabrik zurückgeführt werden kann, so daß ein wirtschaftlicher Kreislauf entsteht.

Besonders bedeutsam ist, däß keine Deponiekosten mehr anfallen und daß die schon jetzt knappen Deponiekapazitäten nicht unnötig belastet werden.

## Ansprüche

1. Verfahren zur Behandlung von bei der Rauchgasentschwefelung mit $CaCO_3$ anfallendem Abwasser, bei dem man aus der angefallenen $CaCl_2$-Lösung gegebenenfalls vorhandene Schwermetallanteile ausfällt, dadurch gekennzeichnet, daß man die verbleibende Lösung mit $Na_2CO_3$ versetzt und den daraufhin gebildeten $CaCO_3$-Niederschlag von der erhaltenen NaCl-Lösung abfiltriert.

2. Verfahren nach Anspruch 1, dadurch gekennzeichnet, daß man die Reaktionslösung zum Zwecke der Carbonatfällung auf eine Temperatur von etwa 40° C aufheizt.

Europäisches
Patentamt

# EUROPÄISCHER RECHERCHENBERICHT

Nummer der Anmeldung

EP 87 11 3501

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 433 759 (MITSUBISHI)<br>* Seite 3, Zeile 1 - Seite 5, Zeile 23;<br>Seite 8, Zeile 16 - Seite 9, Zeile 25;<br>Figuren * | 1 | B 01 D 53/34<br>C 02 F 1/52 |
| X | DE-A-3 523 820 (MITSUBISHI)<br>* Seite 3, Zeile 1 - Seite 6, Zeile 15;<br>Seite 10, Zeile 6 - Seite 12, Zeile 4;<br>Figur 1 * | 1 | |
| A | EP-A-0 005 301 (METALLGESELLSCHAFT)<br>* Ansprüche 1,6-8 * | 1 | |
| A | DE-A-3 305 120 (UHDE)<br>* Zusammenfassung *<br>----- | 1 | |

|  |  |
|---|---|
|  | RECHERCHIERTE SACHGEBIETE (Int. Cl.4)<br><br>B 01 D<br>C 02 F |

Der vorliegende Recherchenbericht wurde für alle Patentansprüche erstellt

| Recherchenort | Abschlußdatum der Recherche | Prüfer |
|---|---|---|
| DEN HAAG | 28-01-1988 | KANOLDT W.W. |